# EUROPEAN PATENT APPLICATION

(11) **EP 1 249 485 A1**
(43) Date of publication of application: **16.10.2002**
(21) Application number: 99959757.8
(22) Date of filing: 10.12.1999
(51) Int. Cl.: C10G 7/06, C10G 7/00

(54) **PETROLEUM PROCESSING METHOD AND DEVICE THEREFOR**

(71) Applicant: JGC Corporation, Tokyo 100-0004 (JP)
(72) Inventor: OKADA, Tsuyoshi, JGC Corporation, Yokohama-shi, Kanagawa 220-6001 (JP); SUGIMOTO, Akira, JGC Corporation, Yokohama-shi, Kanagawa 220-6001 (JP); KUBO, Masatoshi, JGC Corporation, Yokohama-shi, Kanagawa 220-6001 (JP); KATOH, Yoshio, Yokohama-shi, Kanagawa 247-0009 (JP)
(74) Representative: Calamita, Roberto
(86) International application number: JP9906950
(87) International publication number: WO01042393

(57) **Abstract**

A petroleum processing method for fractionating a feed oil into atmospheric distillate, vacuum distillate and vacuum residue, the petroleum processing method comprising the steps of:
(i) performing an atmospheric distillation of a feed oil to thereby attain a separation thereof into atmospheric distillate and reduced crude; and
(ii) subjecting the reduced crude to a vacuum distillation without heating to thereby attain a separation thereof into vacuum distillate and vacuum residue.
Thus, there can be provided a method and an apparatus which enable obtaining vacuum distillate from reduced crude in an economical manner without heating the reduced crude.

## Description

### FIELD OF THE INVENTION

The present invention relates to a petroleum processing method and an apparatus therefor. More particularly, the present invention relates to a method in which an atmospheric distillation is performed in combination with a vacuum distillation so that a feed oil such as crude oil is fractionated into atmospheric distillate, vacuum distillate (vacuum gas oil) and vacuum residue and relates to an apparatus therefor.

### BACKGROUND OF THE INVENTION

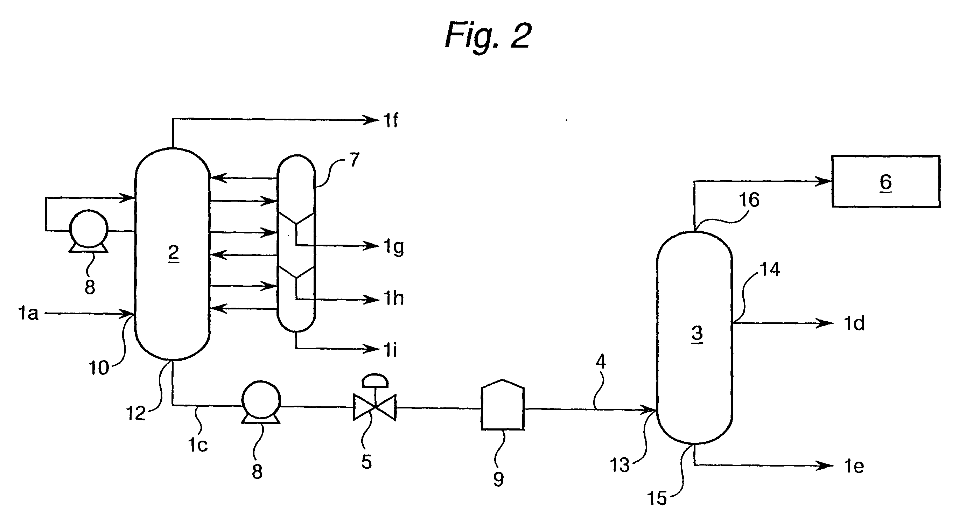

In the petroleum refining industry, referring to Fig. 2, reduced crude (topped crude, long residue or topper bottom) 1c obtained as a column bottom oil when an atmospheric distillation (topping) of crude oil 1a is performed at atmospheric distillation column 2 is generally withdrawn and fed to furnace 9 by pump 8. The reduced crude 1c is preheated to vacuum distillation temperature by the furnace 9, and introduced in vacuum distillation part 3 whose pressure has been reduced by evacuator 6. A vacuum distillation is performed there to thereby obtain vacuum gas oil fraction 1d and vacuum residue (short residue or vacuum bottom) 1e.

That is, the conventional equipment for effecting vacuum distillation comprises a pump for feeding reduced crude to be supplied to a vacuum distillation column into a furnace, a furnace for preheating to high temperatures, a vacuum distillation column for distilling reduced crude at vacuum condition and an evacuator for producing vacuum condition.

The vacuum gas oil fraction can easily be converted to light oil. Thus, attempts are being made to raise the yield of vacuum gas oil fraction from reduced crude in accordance with the recent-year increase of demand for white pale oil such as gasoline, kerosene, light oil and others. Consequently, the vacuum distillation tends to be carried out under such conditions that reduced crude is heated by a furnace to high temperatures at which a thermal cracking is likely to occur and then introduced in a vacuum distillation apparatus where the vacuum distillation is conducted at a high degree of vacuum.

Currently, in the furnace for heating reduced crude, the reduced crude is prevailingly preheated at high temperatures such as about 380 to 420°C.

With respect to apparatus as well, there are tendencies to employ a furnace capable of achieving higher temperatures, an evacuator capable of increasing the degree of vacuum and a vacuum distillation apparatus capable of coping with such strict conditions in conformity with the above trend.

However, the production at high yield of vacuum gas oil from reduced crude in the above manner encounters the problems of equipment cost increase and energy consumption increase.

Moreover, the vacuum gas oil obtained from a reduced crude affected by thermal cracking contains a large proportion of olefin components, so that the vacuum gas oil is unstable. Thus, a drawback has been encountered in requiring a hydrogenation with a large volume of hydrogen to attain a stabilization of the vacuum gas oil.

Further, at the time of preheating, unfavorable coking reaction occurs simultaneously with the thermal cracking reaction of reduced crude. Thus, the content of carbon residue (Conradson Carbon Residue) in vacuum residue is increased, causing a drawback in the use of vacuum residue as a fuel. Another drawback has been encountered by fouling of coke to the furnace tube, piping, vacuum distillation apparatus, etc., which prevents long-term continuous operation.

Still further, as aforementioned, the equipment for effecting vacuum distillation comprises a pump for feeding reduced crude into a furnace, a furnace for preheating to high temperatures, a vacuum distillation column and an evacuator for achieving vacuum condition. Thus, a drawback has been encountered in requiring a large site area. A further drawback has been encountered in the need of long piping connecting apparatuses together which causes an increase of piping equipment cost, the need of long piping attributed to the vacuum distillation of reduced crude conducted through a multiplicity of process units.

In this state of the art, there has been a demand for a method and an apparatus whereby a vacuum gas oil fraction can be obtained at low cost without any thermal cracking of reduced crude.

A method of processing an atmospheric residue in vacuum condition without heating in order to remove water from the column bottom oil is known. However, the purpose of this vacuum processing is to remove water and the vacuum processing is performed at about 180°C under a pressure of about 150 mmHg, and this vacuum processing is not intended to fractionate a vacuum gas oil fraction from reduced crude.

Furthermore, a simplified atmospheric distillation method in which crude oil is separated into two fractions, one consisting of gasoline and lighter distillates and the other consisting of residue containing kerosene and gas oil fraction, is known. However, this method has a drawback in that effective utilization of the crude oil cannot be attained because the residue contains kerosene and gas oil fraction.

### DISCLOSURE OF THE INVENTION

The object of the present invention is to provide a method of efficiently obtaining, through fractionation, vacuum distillate (vacuum gas oil) from reduced crude at low cost and to provide an apparatus suitable to the method. In particular, the object of the present invention is to provide a simple economically advantageous petroleum processing method by which a feed oil such as crude oil is fractionated into atmospheric distillate, vacuum distillate and vacuum residue and to provide an also economically advantageous apparatus of simple structure suitable to the method.

Accordingly, in one aspect of the present invention, there is provided a petroleum processing method for fractionating a feed oil into atmospheric distillate, vacuum distillate and vacuum residue, the petroleum processing method comprising the steps of:
(i) performing an atmospheric distillation of a feed oil to thereby attain a separation thereof into atmospheric distillate and reduced crude; and
(ii) subjecting the reduced crude to a vacuum distillation without heating to thereby attain a separation thereof into vacuum distillate and vacuum residue.

In another aspect of the present invention, there is provided a petroleum processing apparatus for fractionating a feed oil into atmospheric distillate, vacuum distillate and vacuum residue, the petroleum processing apparatus comprising:
atmospheric distillation means capable of separating a feed oil into atmospheric distillate and reduced crude;
vacuum distillation means capable of separating the reduced crude into vacuum distillate and vacuum residue in vacuum condition; and
a piping mean for directly feeding the reduced crude into the vacuum distillation means.

In a further aspect of the present invention, there is provided a petroleum processing apparatus of distillation column structure for fractionating a feed oil into atmospheric distillate, vacuum distillate and vacuum residue,
the distillation column structure comprising atmospheric distillation means arranged at an internal upper part thereof and vacuum distillation means arranged at an internal lower part thereof,
the atmospheric distillation means comprising a feed oil inlet, an atmospheric distillate outlet and a reduced crude outlet,
the vacuum distillation means comprising a reduced crude inlet, a vacuum distillate outlet, a vacuum residue outlet and a vacuum device connecting port,
the reduced crude outlet of the atmospheric distillation means coupled through a piping mean with the reduced crude inlet of the vacuum distillation means.

### BRIEF DESCRIPTION OF THE DRAWING

Fig. 1 is a schematic diagram showing the petroleum processing method of the present invention, particularly the process constitution of Example 1;
Fig. 2 is a schematic diagram showing the prior art, particularly the process constitution of Comparative Example 1; and
Fig. 3 is a schematic explanatory view of an apparatus of the present invention comprising a distillation column structure.
   - 1a:: feed oil
   - 1b:: atmospheric distillate
   - 1c:: reduced crude
   - 1d:: vacuum distillate
   - 1e:: vacuum residue
   - 1f:: naphtha
   - 1g:: kerosene
   - 1h:: light gas oil
   - 1i:: heavy gas oil
   - 2:: atmospheric distillation column
   - 2':: atmospheric distillation part
   - 3:: vacuum distillation column
   - 3':: vacuum distillation part
   - 4:: piping
   - 5:: valve
   - 6:: evacuator
   - 7:: side stripper
   - 8:: pump
   - 9:: furnace
   - 10:: feed oil inlet
   - 11:: atmospheric distillate outlet
   - 12:: reduced crude outlet
   - 13:: reduced crude inlet
   - 14:: vacuum distillate outlet
   - 15:: vacuum residue outlet
   - 16:: vacuum device connecting port
   - A:: distillation column structure

### PREFERRED EMBODIMENTS OF THE INVENTION

The present invention will be described in greater detail below.

### Petroleum processing method

The petroleum processing method of the present invention is a method for fractionating a feed oil into atmospheric distillate, vacuum distillate and vacuum residue, the method comprising the steps of:
(i) performing an atmospheric distillation of a feed oil to thereby attain a separation thereof into atmospheric distillate and reduced crude; and
(ii) subjecting the reduced crude to a vacuum distillation without heating to thereby attain a separation thereof into vacuum distillate and vacuum residue.

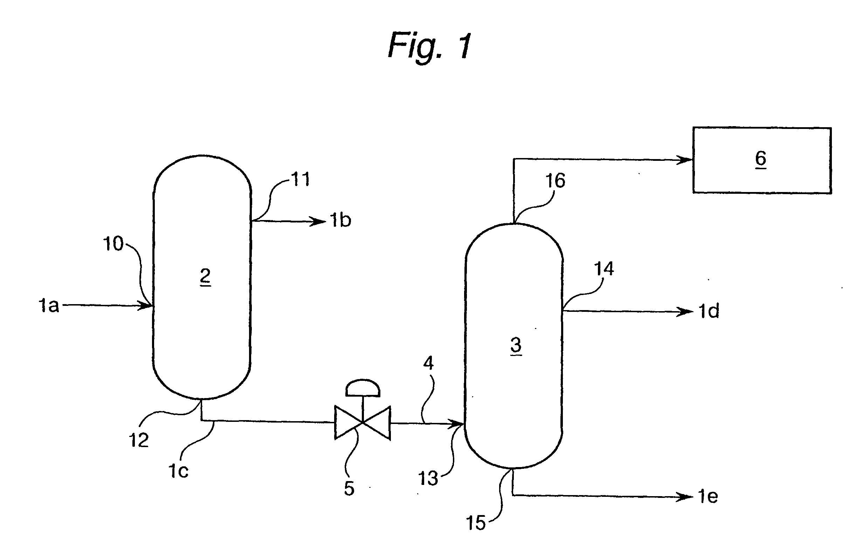

One mode of petroleum processing method according to the present invention will be described with reference to Fig. 1. First, feed oil 1a is preheated. The preheated feed oil is fed into atmospheric distillation column 2 wherein an atmospheric distillation is performed to thereby obtain atmospheric distillate 1b and reduced crude 1c. The obtained reduced crude 1c without being heated is fed into vacuum distillation column 3 wherein a vacuum distillation is performed to thereby obtain vacuum distillate 1d and vacuum residue (short residue or vacuum bottom) 1e.

The atmospheric distillation can be performed by means of an atmospheric distillation apparatus such as atmospheric distillation column 2 into which preheated feed oil 1a is fed. The terminology "atmospheric" refers to a pressure condition such that about 0.5 to 2 kg/cm²G is exhibited at flash zone of feed oil in the atmospheric distillation apparatus. The atmospheric distillation enables fractionating distillates whose boiling point is generally not higher than about 350°C, depending on the temperature of flash zone, and obtaining reduced crude as a column bottom oil.

In the present invention, not only various types of crude oils but also heavy oil and oils obtained by cracking organic polymeric compounds such as coal, natural bitumen and plastic can be used as the feed oil 1a. The light gas contained in the atmospheric distillate 1b can be separated and recovered if necessary.

The temperature of the reduced crude 1c withdrawn from the atmospheric distillation apparatus is preferably in the range of about 330 to 380°C, still preferably 330 to 350°C.

Subsequently, the reduced crude withdrawn from the atmospheric distillation apparatus is fed through piping 4 into vacuum distillation apparatus 3 without being heated.

In the present invention, the temperature of reduced crude exhibited when being fed into the vacuum distillation apparatus, is preferably lower than that of the feed oil being fed into the atmospheric distillation apparatus, although depending on the temperature condition during the atmospheric distillation, is preferably 380°C or below, still preferably 330 to 380°C, and optimally 330 to 350°C. It is preferred that the temperature of reduced crude be as mentioned above, because the thermal cracking thereof is inhibited.

The reduced crude is fed into the vacuum distillation apparatus without being heated. Therefore, it is not needed to provide a furnace between the atmospheric distillation apparatus and the vacuum distillation apparatus. However, when a furnace is already provided, the petroleum processing method of the present invention can be executed by feeding the reduced crude into the vacuum distillation apparatus with heating only for maintaining the temperature of the reduced crude in the furnace.

The subsequent vacuum distillation of reduced crude by a vacuum distillation column can be performed under conventional vacuum distillation conditions.

With respect to the vacuum conditions employed for the vacuum distillation, when, for example, a vacuum distillation column is used as the vacuum distillation apparatus and no steam is introduced therein, it is preferred that the column top pressure be in the range of about 5 to 100 mmHg, especially about 5 to 20 mmHg, and that the pressure at flash zone of reduced oil be in the range of about 20 to 150 mmHg, especially about 20 to 50 mmHg. During the vacuum distillation, steam can be introduced in the vacuum distillation apparatus to thereby lower the partial pressure of oil.

In the present invention, the reduced crude is not heated, so that it can be introduced in the vacuum distillation apparatus without suffering from thermal cracking.

Therefore, the reduced crude is almost free from the formation of olefins by thermal cracking and ensures a low probability of coking before being introduced in the vacuum distillation apparatus.

Vacuum distillate 1d as a distillate and vacuum residue 1e can be obtained from the vacuum distillation apparatus.

The vacuum distillate (vacuum gas oil) obtained in the present invention is produced by a vacuum distillation of reduced crude which has not undergone any thermal cracking, so that the olefin content thereof is less than that of the conventional vacuum distillate. Therefore, the vacuum distillate obtained in the present invention is more stable than conventional vacuum distillate having higher olefin contents.

The vacuum distillate obtained in the present invention is suitable for use as a feed oil in such processes as the fluid catalytic cracking, hydrocracking and hydrodesulfurization.

The content of metal compounds and asphaltenes as catalyst poison in the vacuum distillate is extremely small, and hence the vacuum distillate is suitable for use as a feed oil in various processes without the need of a step for removing them.

Furthermore, the vacuum distillate obtained in the present invention has a low olefin content as compared with that obtained by heating reduced crude and conducting a vacuum distillation thereof at high temperature. So that, when the vacuum distillate obtained in the present invention is hydrotreated, the hydrogen consumption is small with economic advantage.

Still further, the vacuum distillate obtained in the present invention is light as compared with that obtained by heating reduced crude and conducting a vacuum distillation thereof at high temperature. Therefore, when it is used as a feed oil in the above cracking process, a conversion to lighter fractions is easy and efficient with economic advantage.

In the present invention, substantially no coking attributed to thermal cracking occurs because the reduced crude without being heated is subjected to a vacuum distillation. Therefore, the content of carbon residue in the vacuum residue obtained in the present invention is so low that the vacuum residue is suitable for use as a fuel oil.

Furthermore, in the present invention, the reduced crude does not suffer from coking, so that it is not likely for coke to accumulate to the piping or the vacuum distillation apparatus. Therefore, shut down maintenance for removing coke fouling to the apparatus is substantially unnecessitated to thereby enable long-term continuous operation. Although, for example, shut down maintenance for the conventional vacuum distillation apparatus must generally be carried out at least every 12 to 24 months depending on operation conditions, operation in the present invention can be continued for a long term period of at least two years to thereby realize a productivity increase. Further, economic advantage is ensured by a decreased frequency of shut down maintenance.

The petroleum processing method of the present invention can be practiced by the use of the petroleum processing apparatus comprising an atmospheric distillation apparatus and a vacuum distillation apparatus, the petroleum processing apparatus not equipped with any furnace between the atmospheric distillation apparatus and the vacuum distillation apparatus. Alternatively, the petroleum processing method of the present invention can be practiced by the use of the petroleum processing apparatus comprising an atmospheric distillation part and a vacuum distillation part integrally coupled with each other, the petroleum processing apparatus not equipped with any furnace for heating reduced crude between the atmospheric distillation part and the vacuum distillation part. Still alternatively, the petroleum processing method of the present invention can be practiced by the use of the conventional petroleum processing apparatus comprising an atmospheric distillation apparatus and a vacuum distillation apparatus, the petroleum processing apparatus equipped with a furnace between the atmospheric distillation apparatus and the vacuum distillation apparatus, provided that the furnace is used only for maintaining the temperature of the reduced crude.

In this petroleum processing method according to the present invention, it is preferred that the obtained atmospheric distillate be hydrotreated. It is also preferred that the obtained vacuum distillate be hydrotreated. Further, the obtained atmospheric distillate and vacuum distillate may be hydrotreated all together. Collective hydrotreatment of the atmospheric distillate and the vacuum distillate is preferred to individual hydrotreatments thereof from the viewpoint that the hydrotreatment apparatus, catalyst and quantity of heat can be economized. In the present invention, the terminology "hydrotreatment" comprehends any treatments accompanied by hydrogen combining reaction, such as hydrogenation, hydrodesulfurization or hydrocracking.

### Petroleum processing apparatus

The petroleum processing apparatus of the present invention is an apparatus for fractionating a feed oil into atmospheric distillate, vacuum distillate and vacuum residue, the apparatus comprising:
atmospheric distillation means capable of separating a feed oil into atmospheric distillate and reduced crude;
vacuum distillation means capable of separating the reduced crude into vacuum distillate and vacuum residue in vacuum condition; and
a piping mean for directly feeding the reduced crude into the vacuum distillation means.

One form of the petroleum processing apparatus of the present invention will now be described with reference to Fig. 1. It includes atmospheric distillation column (atmospheric distillation means) 2, in which an atmospheric distillation of preheated feed oil 1a is performed; vacuum distillation column (vacuum distillation means) 3, in which a vacuum distillation of reduced crude 1c obtained by means of the atmospheric distillation column 2 is performed; and piping 4 for directly feeding the reduced crude 1c into the vacuum distillation column (vacuum distillation means) 3.

The piping 4 for directly feeding the reduced crude into the vacuum distillation means is one through which the reduced crude obtained by the atmospheric distillation means is fed without passing any furnace into the vacuum distillation means. The piping 4 may be fitted with peripheral units which do not apply heat treatment to the reduced crude, such as valve 5, a joint and a flow meter, and also may be fitted with heat insulation.

The petroleum processing apparatus of the present invention is one which fractionates a feed oil into atmospheric distillate, vacuum distillate and vacuum residue. Thus, the apparatus does not need ancillary facilities for atmospheric distillation column, such as a side stripper and pump-around, to thereby enable equipment simplification remarkably as compared with the apparatus in which, in the atmospheric distillation step, the atmospheric distillate is separated into fractions such as naphtha, gasoline, light gas oil and heavy gas oil.

As mentioned above, the petroleum processing apparatus of the present invention is not equipped with any furnace between the atmospheric distillation apparatus and the vacuum distillation apparatus.

Therefore, the equipment cost relating to a furnace can be cut down, and securing the area for installing a furnace and for having a safety zone or the like around a furnace is unnecessitated to thereby enable reducing the site area.

Further, the reduced crude is free from thermal cracking and coking to thereby enable obtaining a vacuum distillate whose olefin and carbon residue contents are low. Also, the fouling of coke to the apparatus can be reduced to thereby enable long-term continuous operation.

Moreover, the length of piping connecting the atmospheric distillation apparatus and the vacuum distillation apparatus can be greatly reduced as compared with that of the conventional petroleum processing apparatus equipped with a furnace between the atmospheric distillation apparatus and the vacuum distillation apparatus.

In the present invention, the length of piping connecting the atmospheric distillation apparatus and the vacuum distillation apparatus can generally be in the range of about 5 to 50 m, preferably about 5 to 30 m, depending on the scale of the petroleum processing apparatus. This piping length is extremely small as compared with about 50 to 100 m generally necessitated when the reduced crude from the atmospheric distillation apparatus is fed through a furnace into the vacuum distillation apparatus.

When the above piping length is small, the heat loss of reduced crude between the atmospheric distillation apparatus and the vacuum distillation apparatus can favorably be reduced. Also, reductions of the piping facility cost and the site area can favorably be attained.

In addition, in the petroleum processing apparatus of the present invention, it is not needed to install a pump between the atmospheric distillation apparatus and the vacuum distillation apparatus because no furnace is provided. In the prior art as shown in Fig. 2, the reduced crude is heated by furnace 9 to thereby occasionally cause the pressure around the furnace of high temperature to be higher than the pressure around part where the reduced crude is withdrawn from the atmospheric distillation apparatus. This necessitates the installation of pump 8 between atmospheric distillation apparatus 2 and vacuum distillation apparatus 3. Such a pump is not necessarily provided in the present invention. Installing no pump is preferred because the pump facility cost can be cut down and the site area can be reduced.

In the petroleum processing apparatus of the present invention, the amount of reduced crude fed into the vacuum distillation apparatus can be controlled only by means of valve 5. This is because not only is the internal pressure of the vacuum distillation apparatus lower than that of the atmospheric distillation apparatus but also the pressure drop at the piping is slight, so that only adjusting of the valve enables feeding an appropriate amount of reduced crude into the vacuum distillation apparatus.

Common apparatus for distilling reduced crude at a reduced pressure can appropriately be used as the vacuum distillation apparatus in the present invention. The reduction of the pressure within the vacuum distillation apparatus can be performed by the use of common evacuator.

As apparent from the above, in the present invention, no furnace is equipped between the atmospheric distillation apparatus and the vacuum distillation apparatus, so that the equipment cost can be largely cut down and the site area can be reduced. Furthermore, the petroleum processing apparatus can have its scale reduced and can also be simplified to thereby facilitate apparatus control and enable low-cost apparatus control.

Furthermore, not only can the piping provided between the atmospheric distillation apparatus and the vacuum distillation apparatus be shortened but also a pump is not necessarily equipped to thereby enable reducing the equipment cost and the site area and further enable facilitating apparatus control.

Still further, the petroleum processing apparatus of the present invention enables obtaining vacuum distillate from reduced crude at low cost. In addition, stable vacuum distillate whose olefin and carbon residue contents are low can be obtained by the use of the petroleum processing apparatus of the present invention because reduced crude is not heated therein.

The pteroleum processing apparatus of the present invention may also be an apparatus of distillation column structure for fractionating a feed oil into atmospheric distillate, vacuum distillate and vacuum residue.

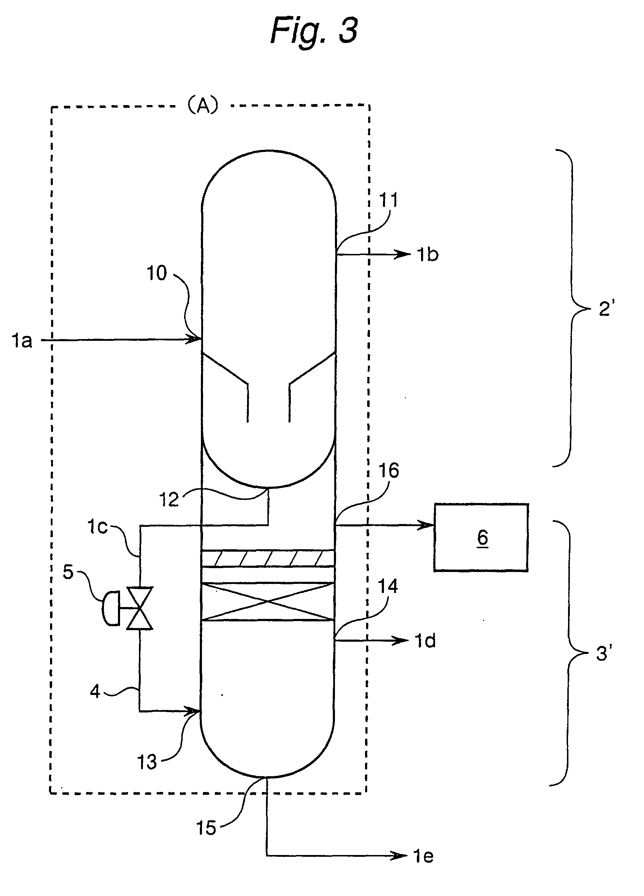

One form of the petroleum processing apparatus comprising a distillation column structure of the present invention is as shown in Fig. 3.

Referring to Fig. 3, the distillation column structure A comprising atmospheric distillation means 2' arranged at an internal upper part thereof and vacuum distillation means 3' arranged at an internal lower part thereof. Referring further to Fig. 3, the atmospheric distillation means 2' comprising a feed oil inlet 10, an atmospheric distillate outlet 11 and a reduced crude outlet 12. The vacuum distillation means 3' comprising a reduced crude inlet 13, a vacuum distillate outlet 14, a vacuum residue outlet 15 and a vacuum device connecting port 16. And the reduced crude outlet 12 of the atmospheric distillation means 2' coupled through a piping 4 with the reduced crude inlet 13 of the vacuum distillation means 3'.

This piping 4 is one through which the reduced crude obtained by the atmospheric distillation means is fed without passing any furnace into the vacuum distillation means. The piping 4 may be fitted with peripheral units which do not apply heat treatment to the reduced crude, such as valve 5, a joint and a flow meter, and also may be fitted with heat insulation. In the present invention, the length of the piping 4 coupling the reduced crude outlet 12 with the reduced crude inlet 13 of the vacuum distillation means 3', although varies depending on the scale of the apparatus, can generally be in the range of about 5 to 50 m, preferably about 5 to 30 m.

In this petroleum processing apparatus of distillation column structure comprising the atmospheric distillation means 2' and the vacuum distillation means 3' coupled together so as to form one body, the atmospheric distillation means 2' enables performing the atmospheric distillation for fractionating a feed oil into atmospheric distillate and reduced crude under the same conditions as in the atmospheric distillation step of the petroleum processing method of the present invention. Further, in this petroleum processing apparatus, the vacuum distillation means 3' enables performing the aforementioned customary vacuum distillation under the same conditions as in the vacuum distillation step of the petroleum processing method of the present invention.

This petroleum processing apparatus according to the present invention comprises the atmospheric distillation means and the vacuum distillation means coupled together so as to form one body, so that the site area can be reduced to a great extent.

In the petroleum processing apparatus of distillation column structure comprising atmospheric distillation means arranged at an internal upper part thereof and vacuum distillation means arranged at an internal lower part thereof according to the present invention, the reduced crude obtained by the atmospheric distillation means, without being heated, is fed into the vacuum distillation means, so that no furnace is equipped between the atmospheric distillation means and the vacuum distillation means.

A pump is not necessarily equipped between the atmospheric distillation means and the vacuum distillation means because no furnace is provided therebetween.

Further, there is no furnace provided, so that the reduced crude does not suffer from coking in a furnace. Therefore, the fouling of coke to piping and vacuum distillation units can be suppressed to thereby enable long-term continuous operation.

Still further, there is no furnace provided, so that it is not needed to supply energy for heating the reduced crude.

Moreover, the piping connecting the atmospheric distillation means and the vacuum distillation means can be shortened, so that not only can the piping facility cost be reduced but also the heat loss which occurs at the introducing of reduced crude into the vacuum distillation part can be minimized to thereby enable efficiently performing vacuum distillation.

The petroleum processing apparatus of the present invention enables reducing the site area as aforementioned and hence enables carrying out apparatus construction at low cost.

Further, vacuum distillate can be obtained from reduced crude at low cost by the use of the petroleum processing apparatus of the present invention. Still further, vacuum distillate whose olefin and carbon residue contents are low can be obtained by the use of the petroleum processing apparatus of the present invention.

Moreover, in the present invention, apparatus control can be facilitated by effecting an apparatus simplification.

### EXAMPLES

The present invention will further be illustrated below with reference to the following Examples which in no way limit the scope of the invention.

### Example 1

Crude oil 1a (crude name: Arabian light) was preheated to 349°C. The preheated crude oil 1a was fed into atmospheric distillation pilot apparatus 2, in which an atmospheric distillation was performed. Reduced crude 1c was withdrawn from the bottom of the atmospheric distillation pilot apparatus 2 . The temperature of the withdrawn reduced crude 1c was 348°C. The properties of this reduced crude 1c are listed in Table 1.

Subsequently, the obtained reduced crude 1c was introduced in vacuum distillation pilot apparatus 3. The temperature of the reduced crude 1c being introduced was 348°C. A vacuum distillation was carried out by the vacuum distillation pilot apparatus 3 under conditions specified in Table 1. Thus, vacuum gas oil 1d and vacuum residue 1e were obtained. The boiling point range of the vacuum gas oil 1d was 289.7 - 561.9°C. The properties of the obtained vacuum gas oil 1d are listed in Table 2.

A schematic view showing the process constitution of this Example is given in Fig. 1.

### Comparative Example 1

The same atmospheric distillation as in Example 1 was performed. The thus obtained reduced crude 1c was fed through a piping into a furnace 9, in which the reduced crude was heated to 430°C. Thereafter, the heated reduced crude was introduced in a vacuum distillation pilot apparatus 3.

Subsequently, a vacuum distillation was performed by means of the vacuum distillation pilot apparatus 3 under conditions specified in Table 1, thereby obtaining vacuum gas oil 1d and vacuum residue 1e. The properties of the obtained vacuum gas oil are listed in Table 2.

A schematic view showing the process constitution of this Comparative Example is given in Fig. 2.

**Table 1**

| | Example 1 | Comp. Ex. 1 |
|---|---|---|
| Reduced crude | | |
| feed rate (liter/h) | 2.0 | 2.0 |
| density (kg/m³) | 962.4 | 962.4 |
| total sulfur (wt.%) | 3.16 | 3.16 |
| Conradson Carbon Residue (wt.%) | 9.01 | 9.01 |

| Operation condition | | |
|---|---|---|
| column top pressure (mmHg) | 10.0 | 10.0 |
| flash zone pressure (mmHg) | 20.0 | 20.0 |
| introduction part temp. (°C) | 348 | 430 |
| flash zone temp. (°C) | 323 | 408 |
| Energy consumption in furnace (kcal/h) | 0 | 182 |

**Table 2**

| | Example 1 | Comp. Ex. 1 |
|---|---|---|
| Vacuum gas oil fraction | | |
| Runoff rate (liter/h) | 0.6 | 1.4 |
| Density (kg/m³) | 903.0 | 933.6 |
| Total sulfur (wt.%) | 2.16 | 2.70 |
| Conradson Carbon Residue (wt.%) | 0.15 | 0.60 |
| Bromine number (gBr₂/100g) | 1.4 | 5.6 |

### INDUSTRIAL APPLICABILITY

A simplified petroleum processing method by which vacuum distillate (vacuum gas oil) is obtained from reduced crude without the need to heat the reduced crude can be provided by the present invention. Further, in the present invention, the reduced crude does not suffer from thermal cracking with the result that stable vacuum distillate whose olefin content is low can be obtained. Still further, coking does not occur, so that the fouling of coke to apparatus is slight to thereby enable long-term continuous operation of a petroleum processing apparatus.

Moreover, a petroleum processing apparatus by which vacuum distillate can be obtained at low cost from the reduced crude without the need to equip any furnace for heating the reduced crude and peripheral units thereof can be provided by the present invention. The site area can be reduced in accordance with the simplification of the apparatus structure.

## Claims

1. A petroleum processing method for fractionating a feed oil into atmospheric distillate, vacuum distillate and vacuum residue, the petroleum processing method comprising the steps of:
(i) performing an atmospheric distillation of a feed oil to thereby attain a separation thereof into atmospheric distillate and reduced crude; and
(ii) subjecting the reduced crude to a vacuum distillation without heating to thereby attain a separation thereof into vacuum distillate and vacuum residue.

2. The petroleum processing method as claimed in claim 1, wherein the reduced crude being fed into the vacuum distillation step has a temperature which is lower than that of the feed oil being fed into the atmospheric distillation step.

3. The petroleum processing method as claimed in claim 1 or 2, wherein the reduced crude is fed into the vacuum distillation step at a temperature of not higher than 380°C.

4. The petroleum processing method as claimed in any of claims 1 to 3, wherein the atmospheric distillate is hydrotreated.

5. The petroleum processing method as claimed in any of claims 1 to 4, wherein the vacuum distillate is hydrotreated.

6. The petroleum processing method as claimed in any of claims 1 to 3, wherein the atmospheric distillate and the vacuum distillate are hydrotreated all together.

7. The petroleum processing method as claimed in any of claims 1 to 6, wherein the vacuum residue is hydrotreated.

8. A petroleum processing apparatus for fractionating a feed oil into atmospheric distillate, vacuum distillate and vacuum residue, the petroleum processing apparatus comprising:
atmospheric distillation means capable of separating a feed oil into atmospheric distillate and reduced crude;
vacuum distillation means capable of separating the reduced crude into vacuum distillate and vacuum residue in vacuum condition; and
a piping mean for directly feeding the reduced crude into the vacuum distillation means.

9. A petroleum processing apparatus of distillation column structure for fractionating a feed oil into atmospheric distillate, vacuum distillate and vacuum residue,
the distillation column structure comprising atmospheric distillation means arranged at an internal upper part thereof and vacuum distillation means arranged at an internal lower part thereof,
the atmospheric distillation means comprising a feed oil inlet, an atmospheric distillate outlet and a reduced crude outlet,
the vacuum distillation means comprising a reduced crude inlet, a vacuum distillate outlet, a vacuum residue outlet and a vacuum device connecting port,
the reduced crude outlet of the atmospheric distillation means coupled through a piping mean with the reduced crude inlet of the vacuum distillation means.

10. The petroleum processing apparatus as claimed in claim 8 or 9, which is not equipped with any furnace for heating the reduced crude.

11. The petroleum processing apparatus as claimed in any of claims 8 to 10, which is not equipped with no pump for transferring the reduced crude.

12. The petroleum processing apparatus as claimed in any of claims 8 to 11, wherein the piping mean coupling the reduced crude outlet of the atmospheric distillation means coupled with the reduced crude inlet of the vacuum distillation means has a length of not greater than 50 m.
